# FASCICULE DE BREVET EUROPEEN

(11) **EP 4 214 078 B1**
(45) Date de publication et mention de la délivrance du brevet: **01.10.2025**
(21) Numéro de dépôt: 21773519.0
(22) Date de dépôt: 03.09.2021
(51) Int. Cl.: B60K 11/08, F01P 7/10

(54) **CADRE POUR UN DISPOSITIF DE REGULATION D'ARRIVEE D'AIR D'UN VEHICULE**
RAHMEN FÜR EINE VORRICHTUNG ZUR REGELUNG DES LUFTEINLASSES EINES FAHRZEUGS
FRAME FOR A DEVICE FOR REGULATING THE AIR INTAKE OF A VEHICLE

(30) Priorité: 17.09.2020 FR 2009400
(43) Date de publication de la demande: 26.07.2023
(73) Titulaire: VALEO SYSTEMES THERMIQUES, 78320 Le Mesnil Saint-Denis (FR)
(72) Inventeur: VACCA, Frederic, 78322 Le Mesnil-Saint-Denis Cedex (FR); DE FRANCISCO, Juan-Carlos, 50011 Zaragoza (ES)
(74) Mandataire: Valeo Powertrain Systems
(86) Numéro de dépôt international: PCT/EP2021/074428
(87) Numéro de publication internationale: WO 2022/058185

(56) Documents cités:
- WO-A1-2015/032990
- CN-A- 110 758 306
- GB-A- 2 108 263
- US-B2- 10 093 172

## Description

La présente invention concerne le domaine du refroidissement des moteurs de véhicule automobile et plus particulièrement le domaine des dispositifs de régulation d'arrivée d'air dans un compartiment moteur, notamment en face avant d'un véhicule.

On connaît des calandres de face avant de véhicule automobile équipées d'un dispositif de régulation d'arrivée d'air qui comprend une pluralité de volets mobiles dont le pilotage permet d'ouvrir ou de fermer l'accès de l'air à un compartiment moteur. Ces dispositifs de régulation d'arrivée d'air peuvent être désignés par l'acronyme AGS, provenant de l'expression anglaise « Active Grille Shutter » (obturateur actif de calandre). La calandre comporte à cet effet au moins un cadre dans lequel sont montés pivotants les volets mobiles.

Lorsque les volets sont en position fermée, ils obstruent l'ouverture de passage ménagée dans la calandre et l'air ne pénètre pas à l'intérieur du compartiment moteur. Cette position fermée, notamment mise en œuvre lorsque les besoins en refroidissement moteur sont limités, permet de réduire le coefficient de trainée et permet ainsi de réduire la consommation de carburant et l'émission de CO₂. Lorsque les volets sont réglés en position ouverte, l'air peut circuler à travers la calandre via l'entrée d'air, et participer au refroidissement du moteur du véhicule automobile.

Le cadre portant les volets mobiles est rendu solidaire de la calandre et il comprend des paliers qui reçoivent, chacun, un pion participant à définir un axe de pivotement de l'un des volets mobiles. Classiquement, ces paliers présentent chacun une forme en U ouverte sur une face du cadre, les volets mobiles étant montés dans leur(s) palier(s) respectif(s) du côté de cette face du cadre. Notamment, l'ouverture des paliers en U est tournée vers l'avant des véhicules, et ces volets mobiles sont insérés dans le cadre par cette face avant du cadre, c'est-à-dire une face de ce cadre tournée à l'opposé du compartiment moteur une fois en position dans le véhicule. Afin de permettre l'insertion des volets dans les paliers, notamment selon une direction perpendiculaire à un plan d'extension principal du cadre, les languettes subissent une déformation élastique en pivotant autour d'un axe de fléchissement d'une position de repos à une position de travail. Une fois les volets montés sur le cadre, chacune des languettes reprend sa position de repos initiale.

Les tolérances de fabrication du cadre et des volets de montage, ainsi que les jeux de montage des volets sur le cadre, peuvent générer des efforts variables sur les languettes lors de l'insertion des volets. Il peut ainsi se produire, lors du montage d'un volet sur le cadre, une déformation de la languette trop importante qui va au-delà de la limite de déformation élastique de la languette, ce qui peut entraîner une déformation plastique et une modification irréversible de la forme de la languette, voire dans les cas les plus extrêmes la cassure de la languette.

Un cadre pour un dispositif de régulation d'arrivée d'air d'un véhicule comportant au moins deux parois participant à définir au moins une zone d'ouverture adaptée pour recevoir un ensemble de volets mobiles agencés parallèlement les uns par rapport aux autres, au moins un volet mobile étant mobile en rotation autour d'au moins un axe de pivotement, le cadre comprenant au moins un palier porté par une languette élastiquement déformable, le palier étant configuré pour recevoir un pion participant à définir l'axe de pivotement du volet mobile est aussi connu des documents CN110758306A et GB2108263A.

Dans ce contexte, la présente invention propose une alternative aux solutions déjà existantes grâce à un cadre conçu pour répartir au mieux la force exercée sur la languette lors du montage du volet sur le cadre.

La présente invention a ainsi pour principal objet un cadre pour un dispositif de régulation d'arrivée d'air d'un véhicule, le cadre comportant au moins deux parois participant à définir au moins une zone d'ouverture adaptée pour recevoir un ensemble de volets mobiles agencés parallèlement les uns par rapport aux autres, au moins un volet mobile étant mobile en rotation autour d'au moins un axe de pivotement, le cadre comprenant au moins un palier porté par une languette élastiquement déformable, le palier étant configuré pour recevoir un pion participant à définir l'axe de pivotement du volet mobile, la languette étant délimitée dans une paroi du cadre par une rainure en forme de « U », la rainure comprenant une base et deux branches prolongeant respectivement une extrémité de la base, chacune des branches présentant une extrémité libre opposée à la base. Selon l'invention, la rainure comprend au moins une zone de dégagement positionnée au niveau de l'une des extrémités libres des branches de ladite rainure, ladite zone de dégagement prolongeant latéralement la branche correspondante en formant au moins une protubérance, ledit cadre étant caractérisé en ce que au moins une branche s'étend axialement selon un plan d'allongement médian de la branche, ladite branche présentant une dimension latérale moyenne, perpendiculaire au plan d'allongement, d'une première valeur déterminée, dans lequel la zone de dégagement positionnée au niveau de l'extrémité libre de cette branche présente une dimension latérale, perpendiculaire audit plan d'allongement, d'une deuxième valeur supérieure à ladite première valeur déterminée.

On entend par « languette élastiquement déformable », une languette capable de reprendre sa position initiale après avoir subi une déformation mécanique. Avantageusement, cette languette élastiquement déformable est ainsi déformée pour permettre l'insertion du pion du volet mobile dans le palier porté par cette languette et son retour en position initiale permet ensuite de figer la position du pion du volet mobile dans le palier. On peut ainsi assimiler la languette mobile par fléchissement entre une première position de la languette, correspondant à sa position initiale avant le montage de l'ensemble de volets mobiles et après le montage de l'ensemble de volets mobiles sur le cadre, et une position déformée dans laquelle la languette laisse passage à l'insertion des volets mobiles pour leur mise en place sur le cadre. La languette passe de la première position à au moins une deuxième position durant le montage d'au moins un volet mobile sur le cadre en pivotant autour de l'axe de fléchissement, puis de l'au moins deuxième position à la première position une fois que le volet mobile est monté sur le cadre.

Selon un mode de réalisation, la languette est mobile autour d'une charnière disposée entre les deux extrémités mobiles.

Notamment, la languette peut être agencée dans sa position initiale sensiblement dans le plan de la paroi du cadre sur laquelle la languette est articulée et la languette s'étend dans sa position déformée dans un plan sécant du plan de cette paroi du cadre. La languette est ici susceptible de fléchir, autour d'une charnière formée par une bande de matière du cadre à la jonction entre la languette et la paroi du cadre sur laquelle la languette est articulée. L'axe de fléchissement, et la charnière associée, est défini par les extrémités des branches de la rainure, et par la ou les zones de dégagement respectivement positionnée(s) au niveau de l'une des extrémités libres des branches de la rainure.

La zone de dégagement consiste en une augmentation locale des dimensions de la rainure, de manière à former une protubérance lorsque l'on considère la rainure, ou bien un creux lorsque l'on considère la matière de la paroi dans laquelle est inscrite cette rainure, et de manière générale une modification locale du profil du bord délimitant la rainure. Il est notable que cette augmentation locale est située au niveau de la charnière d'articulation de la languette, c'est-à-dire dans la zone où les contraintes de déformation exercées sur la matière de la languette sont les plus importantes. Ces contraintes s'exerçant principalement sur les bords délimitant la rainure, la formation d'une zone de dégagement permet d'augmenter le périmètre de la forme définie par l'extrémité libre des branches de la rainure, ou en d'autres termes la longueur des bords délimitant cette rainure, afin de répartir sur une plus grande zone les contraintes exercées lors du fléchissement des languettes. Une telle répartition permet de diminuer les pics de contraintes et d'éviter de blanchir la matière au niveau de la charnière, c'est-à-dire éviter à la matière de subir une déformation plastique.

Selon une caractéristique optionnelle de l'invention, la charnière présente une dimension latérale, perpendiculaire au plan d'allongement médian de la branche, d'une troisième valeur déterminée. De préférence, ladite troisième valeur est supérieure à la première valeur et à la deuxième valeur. La « dimension latérale » de la charnière est la distance la plus courte entre une zone de dégagement positionnée au niveau de l'extrémité d'une branche et la branche opposée de la rainure, ou le cas échéant la distance la plus courte entre les deux zones de dégagement d'une même rainure, respectivement positionnées à l'extrémité d'une des branches de cette rainure. La dimension est dite latérale en ce qu'elle est sensiblement parallèle à la direction perpendiculaire au plan d'allongement médian d'une branche le long de laquelle est définie la dimension latérale moyenne d'une branche ou d'un dégagement, conformément à ce qui a été décrit précédemment.

Selon une caractéristique optionnelle de l'invention, la zone de dégagement est centrée sur le plan d'allongement médian de la branche, en formant deux protubérances latérales de la branche sensiblement symétriques par rapport à ce plan d'allongement. En d'autres termes, la zone de dégagement présente sensiblement une forme de cercle dont un diamètre est compris dans le plan d'allongement médian de la branche à l'extrémité libre de laquelle la zone de dégagement est positionnée.

Selon une caractéristique optionnelle de l'invention, la zone de dégagement présente un profil dissymétrique par rapport au plan d'allongement médian de la branche, la protubérance s'étendant depuis l'extrémité libre de la branche correspondante à l'opposé de l'autre branche de la rainure. En d'autres termes, la zone de dégagement positionnée à l'extrémité libre d'une branche de la rainure peut être définie d'une part par un bord droit agencé dans le prolongement d'un bord délimitant la branche, et plus particulièrement un bord interne tourné vers l'autre branche, et d'autre part par un bord concave qui génère une forme bombée de la rainure tournée à l'opposé de l'autre branche de la rainure.

Selon une caractéristique optionnelle de l'invention, la deuxième valeur représentative de la dimension latérale de la zone de dégagement est sensiblement de 1,5 à 4 fois, de préférence de 1,5 à 2,5 fois la première valeur représentative de la dimension latérale moyenne de la branche, à l'extrémité libre de laquelle la zone de dégagement est positionnée, et/ou sensiblement de l'ordre de 2 à 6 fois, de préférence 3 à 5 fois moins que la dimension latérale de la charnière.

Le premier rapport entre zone de dégagement et branche permet de s'assurer que l'augmentation du périmètre des bords délimitant la rainure dans la zone de dégagement est suffisante pour une répartition correcte des contraintes, et le deuxième rapport entre zone de dégagement et charnière permet de s'assurer que la modification de la forme de la rainure ne pénalise pas la dimension de la charnière et que la languette peut être correctement articulée sur le cadre.

Selon une caractéristique optionnelle de l'invention, la deuxième valeur représentative de la dimension latérale de la zone de dégagement est comprise entre 4 et 8mm, de préférence entre 4 et 6mm, la première valeur représentative de la dimension latérale moyenne de la branche est comprise entre 2 et 3mm, et la dimension latérale de la charnière est comprise entre 15 et 25mm.

Selon une caractéristique optionnelle de l'invention, la zone de dégagement prolonge axialement la branche correspondante via une zone de jonction de profil courbe.

Selon une caractéristique optionnelle de l'invention, le profil de la protubérance formée par la zone de dégagement, dans le plan de la paroi du cadre, est une portion de cercle.

La zone de dégagement peut notamment présenter une forme générale de « goutte d'eau », avec une zone de dégagement qui présente principalement une forme circulaire et une portion s'amincissant au fur et à mesure qu'on se rapproche d'une des branches de la rainure.

Selon une autre caractéristique optionnelle de l'invention, la rainure comprend une première zone de dégagement positionnée au niveau de l'extrémité de l'une des branches de la rainure, et une deuxième zone de dégagement positionnée au niveau de l'extrémité de l'autre branche de la rainure, les deux zones de dégagement étant symétriques l'une de l'autre par rapport à un plan d'allongement médian de la languette perpendiculaire au plan dans lequel s'étend la paroi du cadre correspondante. Autrement dit, la rainure comprend une zone de dégagement au niveau de chaque extrémité de ces branches et ces zones de dégagement présentent un profil équivalent de manière à s'assurer que la languette fléchisse avec des contraintes de fléchissement bien réparties entre les deux extrémités libres des branches de la rainure.

L'invention concerne également un dispositif de régulation d'arrivée d'air d'un véhicule comprenant au moins un cadre selon l'une quelconque des revendications précédentes et un moyen d'actionnement d'un ensemble de volets mobiles.

Le moyen d'actionnement permet de faire passer les volets mobiles d'une position ouverte à une position fermée, et inversement.

D'autres caractéristiques, détails et avantages de l'invention ressortiront plus clairement à la lecture de la description qui suit de plusieurs exemples de réalisation donnés à titre indicatif et non limitatif en référence aux dessins schématiques annexés, sur lesquels :
[Fig.1] est une vue en perspective d'un dispositif de régulation d'arrivée d'air d'un véhicule selon l'invention, rendant visible une face avant du dispositif tournée vers l'avant du véhicule ;
[Fig.2] est une vue en perspective du dispositif de régulation d'arrivée d'air de la figure 1, selon un angle de perspective rendant ici visible la face arrière du dispositif, configurée pour être tournée vers un bloc moteur du véhicule ;
[Fig.3] est une vue en perspective d'un cadre du dispositif de régulation d'arrivée d'air selon un angle de perspective similaire à celui de la figure 2 ;
[Fig.4] est une vue de côté du cadre de la figure 3, rendant plus particulièrement visible des languettes flexibles du cadre ;
[Fig.5] est une vue de côté similaire à la figure 4, illustrant une variante de réalisation de l'invention.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les dénominations longitudinale, transversale, latérale, gauche, droite, dessus, dessous, se réfèrent à l'orientation, dans un trièdre L, V, T d'un véhicule intégrant un dispositif de régulation d'arrivée d'air 100 selon l'invention. Dans ce repère, un axe longitudinal L représente une direction longitudinale, un axe transversal T représente une direction transversale perpendiculaire à la direction longitudinale, et un axe vertical V représente une direction verticale de l'objet considéré, cette direction verticale étant perpendiculaire à la direction longitudinale et à la direction transversale. Selon l'orientation donnée aux figures, la direction longitudinale est parallèle à une direction de déplacement principale d'un véhicule intégrant le dispositif de régulation d'arrivée d'air selon l'invention et la direction verticale correspond à une direction perpendiculaire à la route le long de laquelle se déplace ce véhicule, la direction transversale correspondant à une direction parallèle à un axe transversal le long duquel s'étend principalement un volet du dispositif de régulation d'arrivée d'air, tel que cela va être décrit plus en détails ci-après. De plus, il convient de noter qu'une dimension mesurée le long d'un axe parallèle à l'axe longitudinal sera dénommée « longueur », qu'une dimension mesurée le long de l'axe transversal sera dénommée une « largeur » et qu'une dimension mesurée le long de l'axe vertical sera dénommée une « hauteur ».

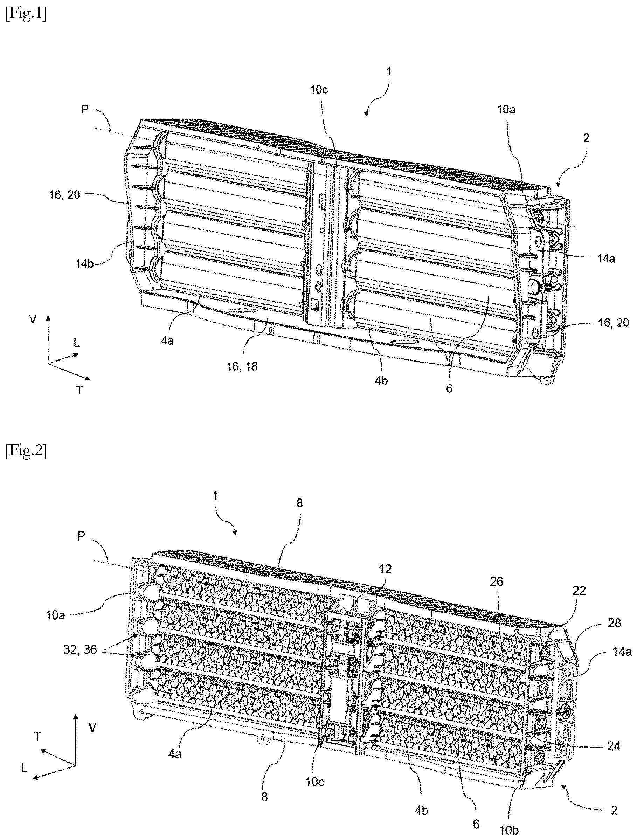

Sur la figure 1 est illustré un dispositif de régulation d'arrivée d'air 1 de face avant d'un véhicule, ledit dispositif 1 étant vu par l'avant du véhicule. L'« avant » du véhicule est défini selon le sens de circulation normale du véhicule lorsque celui-ci circule sur une route, c'est-à-dire que le dispositif de régulation d'arrivée d'air 1 est ici observé depuis une calandre du véhicule dans lequel est intégré ledit dispositif. Ce même dispositif de régulation d'arrivée d'air 1 de face avant d'un véhicule est également illustré sur la figure 2, ledit dispositif 1 étant vu par l'arrière du véhicule.

L'« arrière » du véhicule est également défini selon le sens de circulation normale du véhicule lorsque celui-ci circule sur une route, c'est-à-dire que le dispositif de régulation d'arrivée d'air 1 est ici observé depuis le moteur du véhicule par exemple.

Le dispositif de régulation d'arrivée d'air 1 est notamment configuré pour guider l'air extérieur au véhicule vers un moteur et/ou tout autre partie du véhicule nécessitant un refroidissement par l'air extérieur.

Pour cela, le dispositif de régulation d'arrivée d'air 1 comprend au moins un cadre 2 définissant au moins une zone d'ouverture 4 adaptée pour recevoir un ensemble de volets mobiles 6. Selon l'exemple illustré sur les figures 1 et 2, le cadre 2 définit plus particulièrement deux zones d'ouverture 4 dans lesquelles sont reçus deux ensembles de volets mobiles 6. Tel que représenté, les volets mobiles 6 d'un même ensemble reçu dans l'une des zones d'ouverture 4 sont disposés les uns à côté des autres verticalement et s'étendent, respectivement, selon une direction transversale.

Au moins un volet mobile 6 peut prendre une position ouverte dans laquelle il laisse entrer un flux d'air extérieur dans le véhicule, ou une position fermée dans laquelle il empêche ce flux d'air extérieur d'entrer dans le véhicule. En d'autres termes, un volet mobile 6 en position ouverte s'étend principalement dans un plan horizontal, c'est-à-dire un plan dans lequel s'inscrivent les axes longitudinal L et transversal T, et ce même volet en position fermée s'étend principalement dans un plan vertical dans lequel s'inscrivent l'axe transversal T et l'axe vertical V. Avantageusement, chacun des volets mobiles 6 est adapté pour prendre ces positions ouvertes ou fermées et les volets mobiles sont agencés à distance les uns des autres de sorte que lorsqu'ils prennent tous une position fermée, les zones d'ouverture correspondantes sont bouchées. Sur les figures 1 et 2, les volets mobiles 6 sont tous dans une position fermée, c'est-à-dire qu'ils n'autorisent pas le passage d'un flux d'air extérieur au véhicule vers le moteur du véhicule.

Au moins un volet mobile 6, avantageusement chacun de ces volets mobiles 6, est mobile en rotation autour d'un axe de pivotement P. Tel que représenté, cet axe de pivotement P est parallèle à l'axe transversal T du trièdre illustré. Selon l'invention, et tel que cela va être décrit plus en détails ci-après, les volets mobiles 6, au niveau de leur axe de pivotement, sont montés sur le cadre par l'intermédiaire de paliers portés par des languettes formées sur le cadre 2.

Selon l'exemple illustré, les deux zones d'ouverture 4 définies par le cadre 2 sont plus particulièrement définies, respectivement, par au moins deux parois transversales 8 du cadre 2 et au moins deux parois verticales 10 de ce cadre 2. On entend par « paroi transversale » une paroi qui s'étend majoritairement selon un axe parallèle à l'axe transversal T et par « paroi verticale », une paroi qui s'étend majoritairement selon un axe parallèle à l'axe vertical V.

Plus particulièrement, le cadre 2 comprend deux parois verticales externes 10a, 10b et une paroi verticale centrale 10c située entre les deux parois verticales externes 10a, 10b selon l'axe transversal T et commune aux deux zones d'ouverture 4 délimitées par le cadre 2. Cette paroi verticale centrale 10c forme un logement pour un actionneur 12 visible sur la figure 2 et adapté pour actionner les volets mobiles 6, c'est-à-dire pour permettre le passage de ces volets mobiles 6 de leur position fermée à leur position ouverte, et vice versa, selon les instructions qu'il reçoit.

Le cadre 2 comprend également au moins une bride de fixation 14 adaptée pour permettre la fixation du cadre 2, et par conséquent des volets mobiles 6 portés par ce cadre 2, sur le véhicule. Selon l'exemple illustré, le cadre 2 comprend plus particulièrement au moins deux brides de fixation, une première bride de fixation 14a étant portée par une première paroi verticale externe 10a qui participe à définir une première zone d'ouverture 4a et une deuxième bride de fixation 14b étant portée par une deuxième paroi verticale externe 10b qui participe à définir une deuxième zone d'ouverture 4b. La première bride de fixation 14a et la deuxième bride de fixation 14b s'étendent, respectivement, en éloignement des volets mobiles 6 reçus dans la première zone d'ouverture 4a et en éloignement des volets mobiles 6 reçus dans la deuxième zone d'ouverture 4b. Autrement dit, chacune des brides de fixation 14a, 14b s'étend depuis l'une des première ou deuxième parois verticales externes 10a, 10b, en éloignement de la paroi verticale centrale 10c.

Selon un exemple de mise en œuvre de l'invention, le cadre 2 peut être réalisé par un procédé de moulage par injection et les languettes élastiquement déformables et porteuses des paliers précédemment évoquées peuvent être réalisées d'un seul tenant avec le cadre lors de cette injection.

Selon l'exemple illustré, le cadre 2 est avantageusement prolongé, vers l'avant, par un organe de guidage d'air 16, qui permet de guider l'air entre la calandre et le cadre, en étant agencé sur tout le pourtour du cadre. Tel que représenté, cet organe de guidage d'air 16 borde la première zone d'ouverture 4a et la deuxième zone d'ouverture 4b et est continu entre ces deux zones d'ouverture 4. Cet organe de guidage d'air 16 comprend ainsi au moins deux bords transversaux 18 reliés entre eux par au moins deux bords verticaux 20. Cet organe de guidage d'air 16 peut être rapporté et fixé sur le cadre 2, par tout moyen de fixation connu, ou bien être issu de matière avec le cadre 2, c'est-à-dire que le cadre 2 et l'organe de guidage d'air 16 forment alors un unique ensemble qui ne peut être séparé sans entrainer la détérioration du cadre 2 ou de l'organe de guidage d'air 16.

Tel qu'évoqué précédemment, au moins l'un des volets mobiles 6, avantageusement l'ensemble de ces volets mobiles 6, est mobile en rotation autour d'un axe de pivotement P transversal matérialisé par au moins un pion solidaire du volet qui est reçu dans au moins un palier 22 formé sur le cadre 2.

Au moins un palier 22 est porté par au moins une languette élastiquement déformable 24. On entend par « élastiquement déformable », une languette configurée pour reprendre une position initiale après avoir subi une déformation mécanique, notamment une déformation par fléchissement autour d'une charnière tel que c'est le cas dans l'exemple illustré. Dans la suite de la description, le terme « languette 24 » pourra également faire référence à une languette élastiquement déformable 24. De plus, et sauf mention contraire, le terme « languettes 24 » pourra faire référence à chacune des languettes élastiquement déformables 24 formées sur le cadre 2.

Comme plus particulièrement visible sur la figure 2, chaque languette 24 est configuré pour former un palier 22 de réception d'un pion de pivotement d'un volet mobile et le cadre 2 comprend au moins autant de languettes 24 que de volets mobiles 6. Les languettes 24 sont notamment disposées au niveau des parois verticales externes 10a, 10b du cadre 2. Selon une alternative, la paroi verticale centrale 10c peut également comprendre un ensemble de languettes 24 déformable élastiquement chacune porteuse d'un palier 22 de réception d'un pion de pivotement d'un volet mobile.

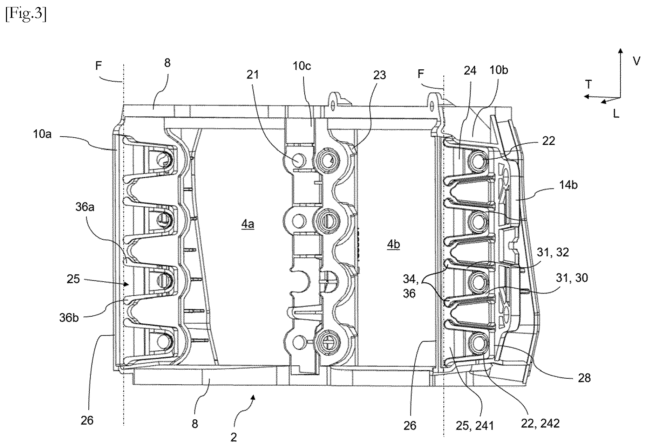

La figure 3 rend plus particulièrement visible des languettes 24 respectivement porteuses d'un palier 22. Selon l'exemple illustré ici, chaque paroi verticale externe comprend quatre languettes 24, chacune porteuse d'un palier 22. Les languettes 24 disposées sur la première paroi verticale externe 10a s'étendent dans un premier plan principal d'extension de la première paroi verticale externe 10a et les languettes 24 disposées sur la deuxième paroi verticale externe 10b s'étendent dans un deuxième plan principal d'extension de la deuxième paroi verticale externe 10b, ces plans principaux d'extension étant sensiblement parallèles aux axes longitudinal L et vertical V.

La description qui suit concerne l'une de ces languettes 24 uniquement. Les languettes 24 étant dans l'exemple illustré identiques les unes aux autres, cette description de l'une d'entre elles s'applique mutatis mutandis aux autres. De façon analogue, les références portées sur l'une de ces languettes 24 sont directement transposables aux autres.

La languette 24 s'étend principalement longitudinalement, le long de l'axe longitudinal L, depuis une face arrière du cadre jusqu'à une face du cadre, en présentant une première extrémité 241, disposée au voisinage d'un bord longitudinal arrière 26 de la paroi verticale externe correspondante, et une deuxième extrémité 242, disposée au voisinage d'un bord longitudinal avant 28 de la paroi verticale externe correspondante, les termes « avant » et « arrière » faisant référence à l'agencement du cadre par rapport au sens de circulation du véhicule selon l'axe longitudinal L.

La première extrémité 241 forme l'extrémité de cette languette 24 par laquelle elle est articulée sur le cadre 2. Plus particulièrement, cette première extrémité 241 prend la forme d'une charnière 25 qui relie la languette 24 au cadre, ici à l'une des parois verticales externes 10a, 10b du cadre 2. La deuxième extrémité 242 porte quant à elle le palier 22 destiné à recevoir un pion définissant l'axe de pivotement de l'un des volets mobiles.

Le palier 22 est ici fermé et consiste en un alésage traversant formé dans la languette 24, l'alésage présentant une dimension sensiblement égale au diamètre du pion formant les moyens de pivotement du volet mobile destiné à être monté sur ce palier. On comprendra que ce mode de réalisation d'un palier fermé n'est pas limitatif de l'invention et que le palier pourrait présenter une forme ouverte, le cas échéant associé à une paroi de recouvrement permettant d'empêcher le dégagement du pion de pivotement une fois en place dans le palier.

La languette 24 est déformable élastiquement de sorte qu'elle est apte à fléchir autour d'un axe formé par la charnière, pour pouvoir prendre une position déformée dans laquelle elle est écartée de la zone d'ouverture la plus proche pour laisser passage à un volet mobile, et pouvoir revenir à sa position d'origine dans laquelle le volet mobile est en prise dans le palier porté par la languette. On comprend que la position d'origine consiste ainsi aussi bien en une position de repos de la languette, avant qu'une contrainte soit exercée sur elle lors de l'insertion d'un volet mobile, qu'en une position de travail où les volets mobiles sont maintenus en position sur le cadre avec uniquement un degré de liberté en rotation.

La languette 24 peut passer d'une position à l'autre, et bouger par rapport à la paroi du cadre sur laquelle elle est articulée, du fait d'une part de l'épaisseur de matière notamment au niveau de la charnière ainsi que du matériau choisi, ici à titre d'exemple un polypropylène chargé en fibre de verre de type PPGF 30, et du fait d'autre part de la présence d'un enlèvement de matière formée dans le cadre autour de la languette. En d'autres termes, la languette 24 est délimitée par rapport au cadre 2 par une rainure 31 formée dans la paroi correspondante du cadre et permettant le fléchissement de la languette 24 par rapport au cadre, cette rainure 31 formant ledit enlèvement de matière précédemment évoqué.

Selon l'exemple illustré ici, au moins un orifice 21 est formé dans la paroi verticale centrale 10c, en regard d'un palier 22 porté par une languette 24 telle qu'elle vient d'être mentionnée. Plus particulièrement, on note qu'une pluralité d'orifices 21 est formée dans la paroi verticale centrale, chaque orifice étant formé verticalement en regard de l'un des paliers 22. On entend par « formé verticalement en regard », le fait que l'orifice et le palier concernés sont alignés l'un par rapport à l'autre le long de l'axe transversal T. Autrement dit, chaque orifice 21 est adapté pour recevoir un moyen définissant l'axe de pivotement de l'un des volets mobiles, cet axe de pivotement étant en outre défini par un moyen, ici un pion, reçu dans le palier 22 faisant face à l'orifice 21 concerné. Dans ce contexte, un premier moyen agencé à une première extrémité transversale du volet mobile et définissant l'axe de pivotement concerné est inséré dans l'un des orifices 21, puis le volet mobile est pivoté pour qu'une deuxième extrémité transversale de ce volet mobile, et plus particulièrement le pion participant à définir l'axe de pivotement, puisse venir en contact de la languette flexible 24 formé en face dudit orifice 21 et déformer celle-ci jusqu'à ce que ce pion vienne se loger dans le palier 22.

Selon un exemple de réalisation non illustré ici, la paroi verticale centrale 10c peut présenter une structure similaire à la structure des parois verticales externes et ainsi comprendre une pluralité de languettes élastiques, chacune équipée d'un palier agencé en regard d'un autre palier formé sur l'une ou l'autre des parois verticales externes, chacun des paliers étant adapté pour recevoir un pion définissant l'axe de pivotement de l'un des volets mobiles. Selon cet exemple de réalisation non illustré, le montage de chaque volet peut avantageusement être réalisé selon un mouvement purement translatif, le long de la direction longitudinale, les moyens participant à définir l'axe de pivotement à chaque extrémité transversale du volet mobile concerné étant insérés simultanément dans deux paliers qui se font face.

Enfin, on note sur la figure 3 la présence sur au moins une paroi verticale du cadre 2 d'au moins un organe de butée 23 formé par une saillie transversale de cette paroi verticale en direction de la zone d'ouverture la plus proche. Selon l'exemple illustré, un organe de butée 23 est formé sensiblement dans le prolongement longitudinal de chaque languette 24. Avantageusement ces organes de butée 23 permettent de limiter le débattement du volet mobile dont le pion de pivotement est reçu dans le palier concerné.

Selon l'invention et tel que cela est plus visible sur les figures 3 à 5, la rainure 31 présente une forme de « U », avec une base 30 et deux branches 32 qui s'étendent depuis la base 30. La base 30 de la rainure 31 participe à définir la forme de la deuxième extrémité 242 de la languette et les extrémités libres 34 des branches 32 participent à former la charnière 25 et la première extrémité 241 de la rainure. De la sorte, et conformément à ce qui a été mentionné précédemment, la base 30 de la rainure est disposée au voisinage du bord longitudinal avant 28 de la paroi verticale externe 10a, 10b et les branches 32 s'étendent depuis la base 30 en direction du bord longitudinal arrière 26 de la paroi verticale externe 10a, 10b. La base 30 de la rainure 31 est ici agencé sensiblement verticalement, et les branches s'étendent principalement longitudinalement. Tel qu'illustré, les branches 32 s'étendent en direction du bord longitudinal arrière 26 en formant un évasement, c'est-à-dire en s'éloignant l'une de l'autre au fur et à mesure qu'elles se rapprochent du bord longitudinal arrière 26 de la paroi verticale externe 10a, 10b.

L'extrémité libre 34 de chacune des branches 32 est au voisinage du bord longitudinal arrière 26 de la paroi verticale externe 10a, 10b sans en être au contact, de sorte que de la matière est présente entre l'extrémité libre des branches et le bord longitudinal arrière 26, la rainure 31 n'étant pas ouverte sur ce bord longitudinal arrière 26.

Par ailleurs, la rainure 31 est traversante de part et d'autre de la paroi verticale externe 10a, 10b selon l'axe transversal T, c'est-à-dire qu'elle débouche vers l'intérieur du dispositif de régulation d'arrivée d'air 1 et vers l'extérieur de ce dernier.

La languette 24 est mobile entre la position d'origine et la position déformée en pivotant autour d'un axe de fléchissement F sensiblement parallèle à l'axe vertical V et passant par les extrémités libres 34 des branches 32 de la rainure 31.

Comme mentionné ci-dessus, la position déformée de la languette 24 diffère de la position d'origine de la languette 24 par un éloignement de la languette 24 de la zone d'ouverture la plus proche. Autrement dit, lorsque la languette 24 est dans la position déformée, elle s'étend dans un plan alternatif et sécant du plan principal d'extension de la paroi verticale externe 10a, 10b, l'axe vertical V s'inscrivant également dans ce plan alternatif.

Lors de la déformation élastique de la languette et de ses changements de position, des contraintes sont principalement exercées sur la languette au niveau de sa base, c'est-à-dire au niveau de la charnière 25 entre la languette et la paroi verticale externe du cadre sur laquelle la languette est articulée. Ces contraintes se répartissent sur le bord délimitant l'extrémité libre.

Selon l'invention, la rainure 31 comprend au moins une zone de dégagement 36 positionnée au niveau de l'une des extrémités libres 34 des branches 32 de ladite rainure 31. Une zone de dégagement au sens de l'invention consiste en une augmentation locale des dimensions de la rainure, de manière à former une protubérance lorsque l'on considère la rainure, ou bien un creux lorsque l'on considère la matière de la paroi dans laquelle est inscrite cette rainure, et de manière générale une modification locale du profil du bord délimitant la rainure.

Tel que représenté ici, la rainure 31 comprend une première zone de dégagement 36a positionnée au niveau de l'extrémité libre 34 de l'une des branches 32 de la rainure 31 et une deuxième zone de dégagement 36b positionnée au niveau de l'extrémité libre 34 de l'autre branche 32 de la rainure 31.

Ces zones de dégagement 36a, 36b consistent en des zones d'augmentation locale des dimensions de la rainure, prenant la forme d'une goutte d'eau formée en à l'extrémité libre de la branche correspondante de la rainure. Il est notable que cette augmentation locale est située au niveau des extrémités libres des branches de la rainure, c'est-à-dire au niveau de la charnière d'articulation de la languette, là où les contraintes de déformation exercées sur la matière de la languette sont les plus importantes. Dans les exemples illustrés, la première zone de dégagement 36a et la deuxième zone de dégagement 36b sont disposées de sorte que leur alignement, défini en considérant le centre de chacune des zones de dégagement, soit confondu ou sensiblement confondu avec l'axe de fléchissement F de la languette 24.

Les zones de dégagement sont réalisées pour augmenter l'étendue du bord délimitant l'extrémité libre 34 des branches et pour augmenter ainsi la zone sur laquelle s'exercent les contraintes de fléchissement de la languette. Ces zones de dégagement 36a, 36b permettent ainsi à la languette 24 de mieux absorber les contraintes de fléchissement dues aux changements de positions de la languette et d'éviter le dépassement d'une limite de déformation élastique de la languette, en répartissant au mieux les contraintes.

Les zones de dégagement 36 prolongent axialement une branche correspondante 32 via une zone de jonction 38 qui présente un profil courbe. De la sorte, on évite de créer une zone de concentration de contrainte lors de la déformation par fléchissement de la languette, en lissant l'augmentation locale de la dimension de la rainure à son extrémité libre.

Il convient de noter que par la suite, une caractéristique décrite pour une zone de dégagement associée à une rainure 31 est valable aussi bien pour l'une et l'autre zones de dégagement 36a et 36b d'une même rainure 31, sauf mention contraire, que pour une unique zone dégagement 36 équipant une rainure, le cas échéant. Le terme « la zone de dégagement 36 » pourra ainsi faire indifféremment référence à une zone de dégagement, une première zone de dégagement 36a et une deuxième zone de dégagement 36a, 36b.

L'augmentation locale de la dimension de la rainure formée par la zone de dégagement 36 se caractérise en considérant une section de la rainure dans le plan d'allongement de la paroi du cadre sur laquelle est articulée la languette, et plus particulièrement une section perpendiculaire à la direction d'allongement principale de la branche 32 d'une rainure.

Tel que cela a été évoqué précédemment, chaque branche 32 prolonge la base 30 de la rainure 31 en direction du bord longitudinal arrière 26, en s'étendant principalement le long d'une direction d'allongement principalement longitudinale en formant un évasement par écartement progressif l'une de l'autre des deux branches d'une même rainure.

Au moins une branche 32 s'étend le long de cette direction d'allongement principalement longitudinale en étant centrée sur un plan d'allongement médian 320 de la branche qui est perpendiculaire au plan dans lequel s'étend principalement la paroi verticale 10 sur laquelle est articulée la languette 24 correspondante.

La rainure débouchant transversalement de part et d'autre de la paroi verticale, cette rainure se caractérise donc principalement par sa dimension latérale, à savoir la dimension dans le plan de la paroi verticale sensiblement perpendiculaire au plan d'allongement médian de la rainure. Au niveau de la branche 32, qui présente le plan d'allongement médian 320 précédemment évoqué, la branche présente une dimension latérale moyenne D32, mesurée dans le plan de la paroi verticale et perpendiculaire au plan d'allongement, d'une première valeur déterminée. Et selon l'invention, il est notable que la zone de dégagement 36 positionnée au niveau de l'extrémité libre 34 de cette branche 32 présente une dimension latérale D36, mesurée de façon similaire dans le plan perpendiculaire à ce plan d'allongement 320 de la branche, d'une deuxième valeur qui est supérieure à la première valeur correspondant à la branche.

Cette deuxième valeur représentative de la dimension latérale D36 de la zone de dégagement 36 peut être sensiblement égale au double de la première valeur représentative de la dimension latérale moyenne D32 de la branche 32, à l'extrémité libre de laquelle la zone de dégagement est positionnée.

A titre d'exemple non limitatif, la deuxième valeur représentative de la dimension latérale D36 de la zone de dégagement 36 peut être comprise entre 4 et 6mm et la première valeur représentative de la dimension latérale moyenne D32 de la branche 32 peut être comprise entre 2 et 3mm. Notamment, la zone de dégagement peut présenter une dimension latérale de l'ordre de 5mm et la dimension latérale moyenne de la branche peut être de l'ordre de 2mm.

De telles dimension ou un tel rapport entre dimension latérale de la branche et dimension latérale de la zone de dégagement formée à l'extrémité libre de la branche permet de quantifier de manière relative l'élargissement de la rainure à son extrémité libre pour permettre une répartition appropriée des contraintes.

Il convient par ailleurs de noter que l'augmentation locale de la dimension latérale de la rainure, au niveau donc de l'extrémité libre des branches, ne peut pas être réalisée au détriment de la présence de matière dans la zone de charnière, étant entendu qu'il convient de s'assurer que la languette puisse fléchir autour de cette charnière sans cassure. Dans ce contexte, la deuxième valeur représentative de la dimension latérale D36 de la zone de dégagement 36 peut être sensiblement égale au quart de la dimension latérale D25 correspondante de la charnière.

A titre d'exemple non limitatif, la deuxième valeur représentative de la dimension latérale D36 de la zone de dégagement 36 peut être comprise entre 4 et 6mm et la dimension latérale D25 de la charnière peut être comprise entre 15 et 25mm.

Tel que cela a été précisé précédemment, la zone de dégagement a pour effet d'augmenter localement la dimension de la rainure et de répartir les contraintes exercées sur la matière par le fléchissement de la languette. Cette augmentation locale est réalisée par ailleurs en lissant sur tout le pourtour de la zone de dégagement les variations de sections de la rainure, afin de lisser les gradients de contraintes. A cet effet, la protubérance formée par la zone de dégagement 36, dans le plan de la paroi verticale du cadre, est une portion de cercle.

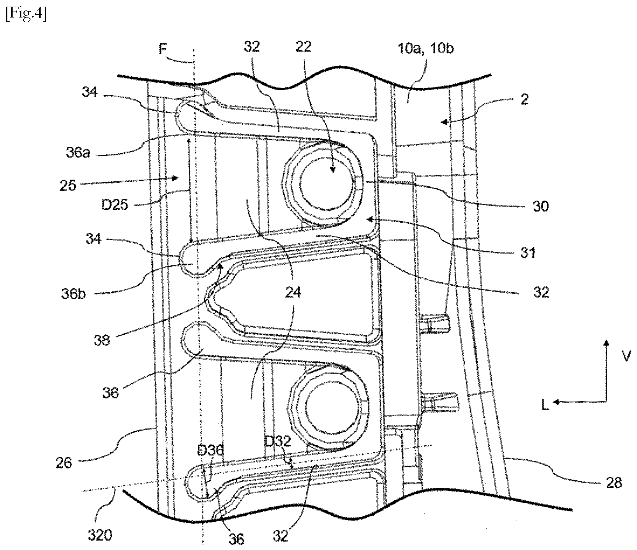

Selon un premier mode de réalisation représenté ici sur la figure 4, la zone de dégagement 36 présente un profil dissymétrique par rapport au plan d'allongement médian de la branche. Plus particulièrement, la zone de dégagement est délimitée d'un côté du plan d'allongement 320 par une première portion droite, c'est-à-dire par un bord agencé dans le prolongement axial du bord délimitant la branche 32 à l'extrémité libre de laquelle la zone de dégagement 36 est positionnée, et de l'autre côté de ce plan d'allongement 320 par une deuxième portion courbée, qui génère la protubérance évoquée précédemment.

Avantageusement, et tel qu'illustré, le profil dissymétrique d'une zone de dégagement associée à une branche de la rainure est tel que la protubérance formée d'un côté de cette zone de dégagement s'étend à l'opposé de l'autre branche de la rainure. On s'assure ainsi d'une présence de matière suffisante entre les extrémités libres des branches de la rainure, et donc d'une zone de charnière suffisamment grande pour permettre le fléchissement approprié de la languette sous contrainte d'insertion d'un volet mobile.

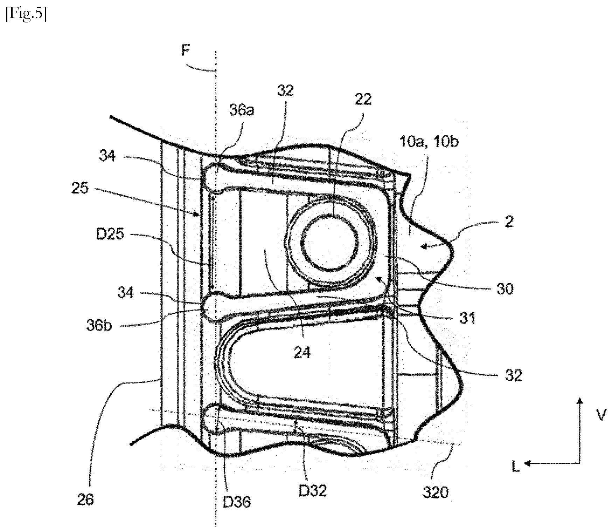

Dans une variante de réalisation illustré sur la figure 5, la zone de dégagement 36 prend une forme circulaire centrée sur le plan d'allongement médian 320 de la branche, de sorte qu'elle forme deux protubérances latérales de la branche 32 sensiblement symétriques par rapport à ce plan d'allongement.

Il convient de noter qu'une rainure 31 comprenant une première zone de dégagement 36a tel qu'illustré sur la figure 4, avec une dissymétrie par rapport au plan d'allongement médian de la branche portant cette première zone de dégagement, et une deuxième zone de dégagement 36b tel qu'illustré sur la figure 5, avec une symétrie par rapport au plan d'allongement médian de la branche portant cette deuxième zone de dégagement ne sortirait pas du cadre de l'invention.

Pour rappel, l'invention vise à diminuer le risque de détérioration des languettes 24 lorsqu'elles subissent des contraintes lors du montage des volets mobiles sur le cadre, de manière à s'assurer que ces contraintes ne génèrent qu'une déformation élastique et non plastique. Chacune des zones de dégagement 36 formée à l'extrémité libre des rainures délimitant les languettes permet d'atteindre cet objectif en augmentant la longueur du bord définissant cette extrémité libre et en permettant ainsi d'augmenter la zone sur laquelle les contraintes de fléchissement sont exercées lors du montage des volets mobiles 6. On permet ainsi une répartition de ces contraintes sur la périphérie de ces zones de dégagement 36 en diminuant les pics de contraintes et le risque de dégradation des languettes 24.

## Revendications

1. Cadre (2) pour un dispositif de régulation d'arrivée d'air (1) d'un véhicule, le cadre (2) comportant au moins deux parois participant à définir au moins une zone d'ouverture (4) adaptée pour recevoir un ensemble de volets mobiles (6) agencés parallèlement les uns par rapport aux autres, au moins un volet mobile (6) étant mobile en rotation autour d'au moins un axe de pivotement (P), le cadre (2) comprenant au moins un palier (22) porté par une languette (24) élastiquement déformable, le palier (22) étant configuré pour recevoir un pion participant à définir l'axe de pivotement (P) du volet mobile (6), la languette (24) étant délimitée dans une paroi du cadre (2) par une rainure (28) en forme de « U », la rainure (28) comprenant une base (30) et deux branches (32) prolongeant respectivement une extrémité de la base, chacune des branches (32) présentant une extrémité libre (34) opposée à la base (30), la rainure (28) comprennant au moins une zone de dégagement (36) positionnée au niveau de l'une des extrémités libres (34) des branches (32) de ladite rainure (28), ladite zone de dégagement (36) prolongeant latéralement la branche (32) correspondante en formant au moins une protubérance, **caractérisé en ce que** au moins une branche (32) s'étend axialement selon un plan d'allongement médian de la branche (320), ladite branche présentant une dimension latérale moyenne (D32), perpendiculaire au plan d'allongement, d'une première valeur déterminée, dans lequel la zone de dégagement (36) positionnée au niveau de l'extrémité libre (34) de cette branche (32) présente une dimension latérale (D36), perpendiculaire audit plan d'allongement (320), d'une deuxième valeur supérieure à ladite première valeur déterminée.

2. Cadre (2) selon la revendication 1, dans lequel la languette (24) est mobile autour d'une charnière (25) disposée entre les deux extrémités libres (34) des branches de la rainure (28).

3. Cadre (2) selon la revendication 1 ou 2, dans lequel la zone de dégagement (36) est centrée sur le plan d'allongement médian de la branche (320), en formant deux protubérances latérales de la branche (32) sensiblement symétriques par rapport à ce plan d'allongement.

4. Cadre (2) selon la revendication 1 ou 2, dans lequel la zone de dégagement (36) présente un profil dissymétrique par rapport au plan d'allongement médian de la branche, la protubérance s'étendant depuis l'extrémité libre (34) de la branche (32) correspondante à l'opposé de l'autre branche de la rainure.

5. Cadre (2) selon l'une des revendications 1 à 4, dans lequel la deuxième valeur représentative de la dimension latérale (D36) de la zone de dégagement (36) est sensiblement égale au double de la première valeur représentative de la dimension latérale moyenne (D32) de la branche (32), à l'extrémité libre de laquelle la zone de dégagement est positionnée, et/ou sensiblement égal au quart d'une dimension latérale (D25) correspondante de la charnière (25).

6. Cadre (2) selon l'une des revendications précédentes, dans lequel la zone de dégagement (36) prolonge axialement la branche (32) correspondante via une zone de jonction (38) de profil courbe.

7. Cadre (2) selon l'une des revendications précédentes, dans lequel le profil de la protubérance formée par la zone de dégagement (36), dans le plan de la paroi du cadre, est une portion de cercle.

8. Cadre (2) selon l'une quelconque des revendications précédentes, dans lequel la rainure (28) comprend une première zone de dégagement (36a) positionnée au niveau de l'extrémité (34) de l'une des branches (32) de la rainure (28), et une deuxième zone de dégagement (36b) positionnée au niveau de l'extrémité (34) de l'autre branche (32) de la rainure (28), les deux zones de dégagement étant symétriques l'une de l'autre par rapport à un plan d'allongement médian de la languette perpendiculaire au plan dans lequel s'étend la paroi du cadre correspondante.

9. Dispositif de régulation d'arrivée d'air (1) d'un véhicule comprenant au moins un cadre (2) selon l'une quelconque des revendications précédentes et un moyen d'actionnement (12) d'un ensemble de volets mobiles (6).

## Patentansprüche

1. Ein Rahmen (2) für eine Luftansaugregelvorrichtung (1) eines Fahrzeugs, wobei der Rahmen (2) mindestens zwei Wände umfasst, die an der Definition mindestens einer Öffnungszone (4) beteiligt sind, die zur Aufnahme eines Satzes von parallel zueinander angeordneten beweglichen Klappen (6) ausgebildet ist, wobei mindestens eine bewegliche Klappe (6) um mindestens eine Schwenkachse (P) drehbar ist, wobei der Rahmen (2) mindestens ein Lager (22) umfasst, das von einer elastisch verformbaren Zunge (24) getragen wird, wobei das Lager (22) zur Aufnahme eines Stifts konfiguriert ist, der an der Definition der Schwenkachse (P) der beweglichen Klappe (6) beteiligt ist, wobei die Zunge (24) in einer Wand des Rahmens (2) durch eine U-förmige Nut (28) begrenzt ist, wobei die Nut (28) eine Basis (30) und zwei Schenkel (32) umfasst, die sich jeweils von einem Ende der Basis erstrecken, wobei jeder der Schenkel (32) ein freies Ende (34) gegenüber der Basis (30) aufweist, wobei die Nut (28) mindestens eine Freigabezone (36) umfasst, die an einem der freien Enden (34) der Schenkel (32) der Nut (28) positioniert ist, wobei die Freigabezone (36) sich seitlich von dem entsprechenden Schenkel (32) erstreckt, indem sie mindestens einen Vorsprung bildet, **dadurch gekennzeichnet, dass** mindestens ein Schenkel (32) axial entlang einer medianen Verlängerungsebene des Schenkels (320) verläuft, wobei der Schenkel eine durchschnittliche Querabmessung (D32) senkrecht zur Verlängerungsebene von einem ersten bestimmten Wert aufweist, wobei die Freigabezone (36), die am freien Ende (34) dieses Schenkels (32) positioniert ist, eine Querabmessung (D36) senkrecht zur Verlängerungsebene (320) von einem zweiten Wert aufweist, der größer ist als der erste bestimmte Wert.

2. Der Rahmen (2) nach Anspruch 1, wobei die Zunge (24) um ein Gelenk (25) beweglich ist, das zwischen den beiden freien Enden (34) der Schenkel der Nut (28) angeordnet ist.

3. Der Rahmen (2) nach Anspruch 1 oder 2, wobei die Freigabezone (36) auf der medianen Verlängerungsebene des Schenkels (320) zentriert ist, wobei zwei seitliche Vorsprünge des Schenkels (32) im Wesentlichen symmetrisch zu dieser Verlängerungsebene ausgebildet sind.

4. Der Rahmen (2) nach Anspruch 1 oder 2, wobei die Freigabezone (36) ein asymmetrisches Profil in Bezug auf die mediane Verlängerungsebene des Schenkels aufweist, wobei sich der Vorsprung vom freien Ende (34) des entsprechenden Schenkels (32) gegenüber dem anderen Schenkel der Nut erstreckt.

5. Der Rahmen (2) nach einem der Ansprüche 1 bis 4, wobei der zweite repräsentative Wert der Querabmessung (D36) der Freigabezone (36) im Wesentlichen dem Doppelten des ersten repräsentativen Wertes der durchschnittlichen Querabmessung (D32) des Schenkels (32) entspricht, an dessen freiem Ende die Freigabezone positioniert ist, und/oder im Wesentlichen einem Viertel einer Querabmessung (D25) entspricht, die dem Gelenk (25) zugeordnet ist.

6. Der Rahmen (2) nach einem der vorhergehenden Ansprüche, wobei sich die Freigabezone (36) axial von dem entsprechenden Schenkel (32) über eine gekrümmt profilierte Verbindungszone (38) erstreckt.

7. Der Rahmen (2) nach einem der vorhergehenden Ansprüche, wobei das Profil des durch die Freigabezone (36) gebildeten Vorsprungs in der Ebene der Rahmenwand ein Kreisbogenabschnitt ist.

8. Der Rahmen (2) nach einem der vorhergehenden Ansprüche, wobei die Nut (28) eine erste Freigabezone (36a), die am Ende (34) eines der Schenkel (32) der Nut (28) positioniert ist, und eine zweite Freigabezone (36b) umfasst, die am Ende (34) des anderen Schenkels (32) der Nut (28) positioniert ist, wobei die beiden Freigabezonen zueinander symmetrisch sind, bezogen auf eine mediane Verlängerungsebene der Zunge, die senkrecht zu der Ebene ist, in der sich die entsprechende Rahmenwand erstreckt.

9. Eine Luftansaugregelvorrichtung (1) für ein Fahrzeug, umfassend mindestens einen Rahmen (2) nach einem der vorhergehenden Ansprüche und ein Betätigungsmittel (12) für einen Satz von beweglichen Klappen (6).

## Claims

1. A frame (2) for an air intake regulation device (1) of a vehicle, the frame (2) comprising at least two walls participating in defining at least one opening zone (4) adapted to receive a set of movable flaps (6) arranged parallel to each other, at least one movable flap (6) being movable in rotation about at least one pivot axis (P), the frame (2) comprising at least one bearing (22) carried by an elastically deformable tongue (24), the bearing (22) being configured to receive a pin participating in defining the pivot axis (P) of the movable flap (6), the tongue (24) being delimited in a wall of the frame (2) by a U-shaped groove (28), the groove (28) comprising a base (30) and two branches (32) extending respectively from one end of the base, each of the branches (32) having a free end (34) opposite the base (30), the groove (28) comprising at least one clearance zone (36) positioned at one of the free ends (34) of the branches (32) of said groove (28), said clearance zone (36) extending laterally from the corresponding branch (32) by forming at least one protrusion, **characterized in that** at least one branch (32) extends axially along a median extension plane of the branch (320), said branch having an average lateral dimension (D32), perpendicular to the extension plane, of a first determined value, wherein the clearance zone (36) positioned at the free end (34) of this branch (32) has a lateral dimension (D36), perpendicular to said extension plane (320), of a second value greater than said first determined value.

2. The frame (2) according to claim 1, wherein the tongue (24) is movable around a hinge (25) disposed between the two free ends (34) of the branches of the groove (28).

3. The frame (2) according to claim 1 or 2, wherein the clearance zone (36) is centered on the median extension plane of the branch (320), forming two lateral protrusions of the branch (32) substantially symmetrical with respect to this extension plane.

4. The frame (2) according to claim 1 or 2, wherein the clearance zone (36) has an asymmetrical profile with respect to the median extension plane of the branch, the protrusion extending from the free end (34) of the corresponding branch (32) opposite the other branch of the groove.

5. The frame (2) according to any one of claims 1 to 4, wherein the second representative value of the lateral dimension (D36) of the clearance zone (36) is substantially equal to twice the first representative value of the average lateral dimension (D32) of the branch (32), at the free end of which the clearance zone is positioned, and/or substantially equal to one quarter of a lateral dimension (D25) corresponding to the hinge (25).

6. The frame (2) according to any one of the preceding claims, wherein the clearance zone (36) extends axially from the corresponding branch (32) via a curved-profile junction zone (38).

7. The frame (2) according to any one of the preceding claims, wherein the profile of the protrusion formed by the clearance zone (36), in the plane of the frame wall, is a circular arc portion.

8. The frame (2) according to any one of the preceding claims, wherein the groove (28) comprises a first clearance zone (36a) positioned at the end (34) of one of the branches (32) of the groove (28), and a second clearance zone (36b) positioned at the end (34) of the other branch (32) of the groove (28), the two clearance zones being symmetrical with respect to each other relative to a median extension plane of the tongue perpendicular to the plane in which the corresponding frame wall extends.

9. An air intake regulation device (1) for a vehicle comprising at least one frame (2) according to any one of the preceding claims and an actuation means (12) for a set of movable flaps (6).
